# DEMANDE DE BREVET EUROPEEN

(11) **EP 0 834 445 A1**
(43) Date de publication de la demande: **08.04.1998**
(21) Numéro de dépôt: 97401482.1
(22) Date de dépôt: 25.06.1997
(51) Int. Cl.: B62H 5/18, B60R 25/04, B60R 25/00

(54) **Antivol de motocycle à organe apte à agir à distance sur un circuit électrique et motocycle le comportant**

(30) Priorité: 25.06.1996 FR 9607851
(71) Demandeur: Dutoit, Claude, 78121 Crespières (FR); Auvray, Joseph Gilbert André, 17620 St-Jean-D'Angle (FR); Nadjar, Valérie Emma, 75018 Paris (FR)
(72) Inventeur: Baudu, Richard, (FR)

(57) **Abrégé**

L'invention concerne un antivol de motocycle à organe apte à agir à distance sur un circuit électrique.

Cet antivol de motocycle comporte un bloque - disque (2) empêchant le véhicule de se déplacer, ce bloque - disque comportant un organe (41) apte à agir à distance sur un interrupteur d'un circuit électrique.

## Description

La présente invention se rapporte aux antivols de véhicule à deux ou trois roues.

Pour prévenir le vol de motocyclettes, il est déjà connu d'utiliser un moyen mécanique empêchant le véhicule de se déplacer. Ce moyen mécanique peut entraver la roue ou constituer un moyen de retenue à un point fixe. Ce peut être un bloque - disque, un cadenas de type en U, une chaîne ou un antivol articulé.

Lors du démarrage, ce moyen empêchant le véhicule de se déplacer est souvent laissé en position de blocage par l'utilisateur. Rien n'empêchant le fonctionnement du moteur, le véhicule avance dans la marge laissée par le blocage mécanique puis bloque en provoquant souvent dégâts et chutes. En outre, ces moyens mécaniques peuvent être forcés par un voleur et n'assurent qu'une protection médiocre contre le vol.

L'invention pallie ces inconvénients par un antivol de véhicule, qui assure une meilleure protection contre le vol tout en empêchant tout dégât et chute provoqués par le démarrage du véhicule alors que l'antivol est en position de blocage.

L'invention a donc pour objet un antivol de motocyclette comportant un moyen empêchant le véhicule de se déplacer et caractérisé en ce que le moyen comporte un organe apte à agir à distance sur un interrupteur d'un circuit électrique.

En prévoyant, sur un circuit électrique du véhicule, notamment de démarrage, un interrupteur sur lequel ledit organe est apte à agir, on peut empêcher le véhicule de démarrer tant que ledit organe n'a pas agi sur l'interrupteur, l'organe étant trop éloigné pour agir sur l'interrupteur lorsque le moyen est en position de blocage. On empêche ainsi tout démarrage alors que le moyen est encore en position d'empêcher le véhicule de se déplacer. On augmente également la sécurité à l'encontre du vol parce que, pour faire démarrer le véhicule, le voleur doit d'abord forcer le moyen mécanique empêchant le véhicule de se déplacer, puis en mettre l'organe en regard de l'interrupteur, alors que celui ci peut être relativement bien dissimulé dans le véhicule puisque l'organe agit à distance.

L'organe peut être un émetteur de radio-fréquence, un ensemble optoélectronique, mais de préférence, c'est un aimant qui agit sur l'interrupteur d'un circuit électrique de démarrage du moteur du véhicule. L'interrupteur comporte un organe récepteur conjugué qui est donc un capteur magnétique, un capteur optique ou un récepteur basse ou haute fréquence.

L'invention vise également un véhicule à deux ou trois roues comportant un moyen, notamment mécanique, empêchant, lorsqu'il est en position de blocage sur le véhicule, ce dernier de se déplacer, et un interrupteur d'un circuit électrique du véhicule, caractérisé en ce que l'agencement du moyen et de l'interrupteur est tel que le moyen agit à distance sur l'interrupteur lorsqu'il est à une distance de cet interrupteur inférieure à une valeur donnée, et le moyen est, en position de blocage, à une distance de l'interrupteur supérieure à la valeur donnée.

Le moyen peut comporter l'organe apte à agir à distance sur l'interrupteur. Mais l'organe peut être indépendant du moyen et ce dernier est agencé de manière à influer sur la coopération entre l'interrupteur et un organe, différemment suivant qu'il est en position de blocage ou non. Le moyen peut être opaque et intercepter par exemple un rayonnement lumineux ou non suivant la position.

Suivant une variante, l'interrupteur comporte deux capteurs coopérant successivement avec l'organe, l'un des capteurs ne coopérant avec l'organe que lorsque le dit moyen est en position de rangement. L'utilisateur est sûr ainsi de ne pas perdre le moyen de blocage, puisque le démarrage ne peut s'effectuer que s'il est rangé.

L'invention vise aussi un procédé de démarrage d'un motocycle, caractérisé en ce qu'il consiste à agir sur un premier capteur dissimulé du véhicule, puis, dans un laps de temps limité à partir de l'instant où l'on agit sur le premier capteur, à agir sur un second capteur se trouvant à un autre emplacement que le premier capteur.

Aux dessins annexés, donnés uniquement à titre d'exemple :
■ la figure (1) est une vue en coupe d'un bloque disque suivant l'invention ;
■ la figure (2) est un schéma d'une moto suivant l'invention ;
■ la figure (3) est un schéma d'un circuit électrique de démarrage d'une motocyclette coopérant ou non suivant qu'il en est plus ou moins éloigné, avec le capteur d'un interrupteur.

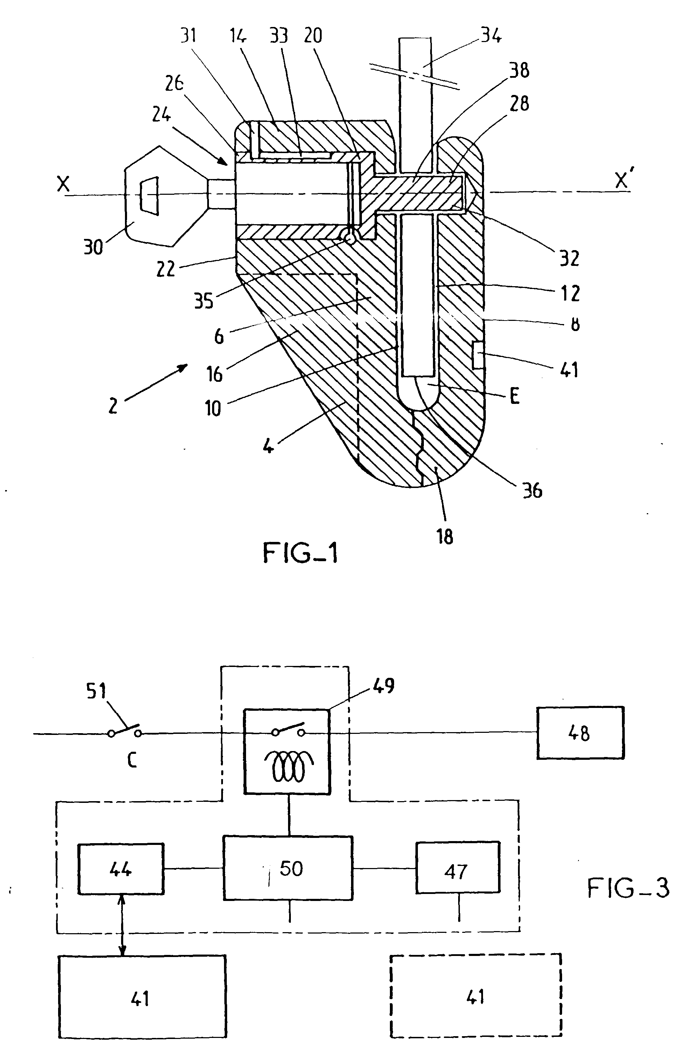

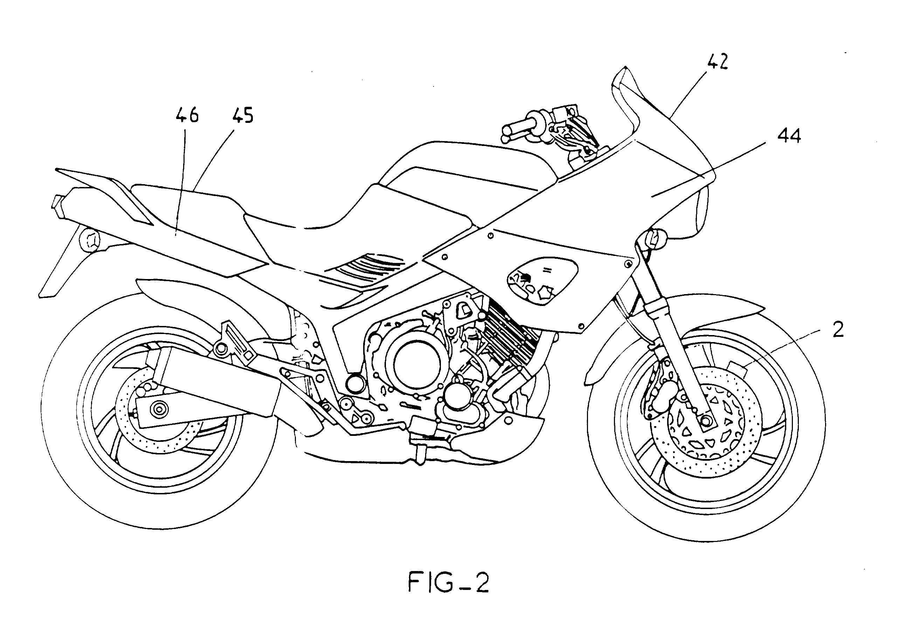

L'antivol de motocyclette représenté à la figure 1 comporte un moyen (2) empêchant le véhicule de se déplacer et comportant un corps (4) ayant une forme de U constitué d'une première branche (6) et d'une seconde branche (8) de manière générale parallèles. Les deux branches (6) et (8) définissent deux faces (10) et (12) respectivement situées en vis à vis et parallèles, un espace à peu près parallélépipédique (E) étant défini entre elles, ayant trois faces ouvertes.

L'extrémité libre de la première branche (6) du U comporte une partie (14) venue de matière s'étendant perpendiculairement à la face (10) et à l'opposé de cette dernière par rapport à l'espace (E).

La partie (14) est de manière générale cylindrique, une nervure de renforcement (16) s'étendant venue de matière entre la partie (14) et la première chambre (6) du U jusqu'à la base (18) du U.

La partie (14) comporte un alésage étagé traversant (20) d'axe X-X perpendiculaire aux faces (10) et (12), constitué d'une partie de petit diamètre s'étendant à partir de la face (10) et prolongée par une partie de grand diamètre s'étendant à partir de la face (10) et prolongée par une partie de grand diamètre s'étendant jusqu'à la face d'extrémité (22) de la partie (14).

Une serrure (24) est agencée dans l'alésage (20). La serrure (24) comporte un corps cylindrique (26) reçu dans la partie de grand diamètre de l'alésage (20), et prolongé au niveau d'une extrémité par un pêne (28) cylindrique coaxial s'étendant au moins partiellement à l'intérieur de la partie de petit diamètre de l'alésage (20). La serrure est du type coulissante, c'est à dire que par action d'une clé (30) amovible, le corps (26) coulisse dans la partie de grand diamètre de l'alésage (20) entre une position inactive dans laquelle le corps (26) est situé partiellement à l'extérieur de l'alésage, le pêne (28) ayant son extrémité libre située légèrement à l'intérieur de la partie de petit diamètre de l'alésage (20), et une position active représentée sur la figure (1).

Dans cette position exacte, le corps (26) de la serrure est reçu entièrement dans la partie de grand diamètre de l'alésage (20) et le pêne (28) s'étend à travers la partie de petit diamètre de l'alésage (20), à travers l'espace (E) et jusque dans un trou borgne (32) percé dans la face (12) coaxialement au pêne (28), c'est à dire d'axe X-X.

Le diamètre du trou borgne (32) est légèrement plus grand que le diamètre du pêne (28).

De plus, le dit moyen (2) comporte des moyens habituels de maintient de la serrure dans l'alésage (20), représentés sur la figure (1) sous la forme d'une goupille (31) coopérant avec une fente longitudinale (33) du corps de la serrure. En position active la serrure est verrouillée de manière habituelle par une bille (35) coopérant avec une cavité agencée dans la surface de la partie de grand diamètre de l'alésage (20), cette coopération étant commandée par la clé (30).

On va maintenant décrire la mise en place d'un tel antivol sur une moto.

En partant de la position inactive décrite ci-dessus, on positionne ledit moyen (2) sur un disque de freinage (34) de moto de sorte que la base (18) du U recouvre une partie du bord périphérique (36) du disque (34), le trou borgne (32) étant en vis à vis d'un trou traversant (38) habituel du disque de freinage (34).

Par action de la clé (30), la serrure (24) et donc le pêne (28) coulissent vers la position active et on retire la clé. Dans cet état ledit moyen (2) est verrouillé sur le disque (34).

Ainsi agencé ledit moyen (2) limite la rotation du disque de freinage (34), en venant en butée contre l'étrier du frein de la moto, empêchant ainsi la rotation du disque et donc de la roue.

Dans le corps (4) est logé un aimant (41) qui sert d'organe apte à agir à distance sur un interrupteur d'un circuit électrique.

Sur la motocyclette représentée à la figure (2), il est prévu, sous la pièce de carénage (42), en un emplacement donné, un capteur (44) faisant partie de l'interrupteur du circuit de démarrage du véhicule représenté à la figure (3).

Sous la selle (45) est prévue un logement (46) de réception du bloque - disque représenté à la figure (1). Ce logement est agencé de sorte que, lorsque le bloque - disque représenté à la figure (1) y est reçu, l'aimant (41) vient en regard d'un capteur (47) faisant partie lui aussi de l'interrupteur représenté à la figure (3).

Le circuit électrique de démarrage du véhicule représenté à la figure (3) comporte un organe (51) de démarrage coopérant avec une clé de contact (C), monté en série avec un dispositif interrupteur et avec le dispositif (48) de démarrage. Le dispositif interrupteur se compose d'un interrupteur (49) proprement dit relié par une unité (50) électronique de gestion aux deux capteurs (44) et (47) . On a représenté également le bloque - disque de la figure (1) en deux positions, l'une en trait plein, dans laquelle l'aimant (41) est à une distance (symbolisée par une double flèche) du capteur (44) inférieure à une distance donnée, de sorte que l'aimant (41) agit maintenant sur le capteur (44) pour que celui ci émette un signal qu'il transmet par l'intermédiaire de l'unité (50) à l'interrupteur (49) afin de fermer celui ci sous condition que, dans les secondes qui suivent, le capteur (47) ait bien envoyé lui aussi à l'unité (50) un signal de validation. L'insertion de la clé de contact permet alors de fermer l'interrupteur (47) et l'interrupteur (49) et de mettre sous tension le dispositif de démarrage (48) du véhicule.

Dans la position du bloque - disque représenté en trait mixte, celui ci est à une distance du capteur (44) supérieure à la distance donnée. Il n'agit pas sur lui. Il est impossible de faire démarrer le véhicule.

## Revendications

1. Antivol de motocycles, comportant un moyen (2) empêchant le véhicule de se déplacer, **caractérisé** en ce que le moyen (2) comporte un organe (41) apte à agir à distance sur un interrupteur d'un circuit électrique.

2. Antivol suivant la revendication -1-, **caractérisé** en ce que l'organe est un aimant, un émetteur de radiofréquence ou un ensemble optoélectronique.

3. Antivol suivant la revendication -1- ou -2- , **caractérisé** en ce que ledit moyen est un moyen mécanique, tel qu'un bloque disque, un cadenas de type en U, une chaîne ou un antivol articulé.

4. Antivol suivant la revendication -1-, -2- ou -3- **caractérisé** en ce que le motocycle puisse également être un vélomoteur, un cyclomoteur, un scooters et plus généralement tous véhicule à deux ou trois roues.

5. Motocycle, comportant un moyen (2) notamment mécanique, empêchant, lorsqu'il est en position de blocage sur le véhicule, ce dernier de se déplacer et un interrupteur (44, 47, 49) d'un circuit électrique du véhicule, **caractérisé** en ce que l'agencement du moyen (2) et de l'interrupteur (44, 47, 49) est tel que le moyen (2) agit à distance sur l'interrupteur différemment lorsque le moyen (2) est en position de blocage ou non.

6. Motocycle suivant la revendication -5-, **caractérisé** en ce que le moyen (2) comporte un organe (41) apte à agir à distance sur l'interrupteur.

7. Motocycle suivant la revendication -5-, **caractérisé** en ce que le moyen (2) est agencé de manière à influer sur la coopération entre l'interrupteur et un organe, différemment suivant qu'il est en position de blocage ou non.

8. Procédé de démarrage d'un motocycle, **caractérisé** en ce qu'il consiste à agir sur un premier capteur dissimulé du véhicule, puis, dans un laps de temps limité à partir de l'instant ou l'on agit sur le premier capteur, à agir sur un second capteur se trouvant à un autre emplacement que le premier capteur.
